## Europäisches Patentamt
## European Patent Office
## Office européen des brevets

(19)

(11) Publication number: **0 149 667**
**B1**

(12)

# EUROPEAN PATENT SPECIFICATION

(45) Date of publication of patent specification: **27.12.89**

(51) Int. Cl.⁴: **F 04 B 9/08, B 60 T 13/20**

(21) Application number: **84902859.2**

(22) Date of filing: **29.06.84**

(86) International application number:
**PCT/US84/01034**

(87) International publication number:
**WO 85/00202 17.01.85 Gazette 85/02**

(60) Divisional application **88100165 filed on 08.01.88.**

(54) PLURAL HYDRAULIC PUMP SYSTEM WITH AUTOMATIC DISPLACEMENT CONTROL.

(30) Priority: **29.06.83 US 508845**

(43) Date of publication of application:
**31.07.85 Bulletin 85/31**

(45) Publication of the grant of the patent:
**27.12.89 Bulletin 89/52**

(84) Designated Contracting States:
**DE FR GB**

(56) References cited:
**DE-B-1 274 402**
**US-A-2 349 310**
**US-A-2 924 940**
**US-A-3 385 217**
**US-A-3 385 312**
**US-A-3 601 506**
**US-A-3 619 093**
**US-A-3 923 423**
**US-A-3 968 811**
**US-A-4 073 140**
**US-A-4 199 943**

(73) Proprietor: **NORTON, Peter**
**170 Beaver Brook**
**Lincoln Park, NJ 07035 (US)**

(72) Inventor: **NORTON, Peter**
**170 Beaver Brook**
**Lincoln Park, NJ 07035 (US)**

(74) Representative: **Orr, William McLean et al**
**URQUHART-DYKES & LORD 5th Floor, Tower**
**House Merrion Way**
**Leeds West Yorkshire, LS2 8PA (GB)**

Courier Press, Leamington Spa, England.

**Description**

This invention relates to a pump system for supplying pressurised fluid to a load device from a reservoir.

The invention has been developed primarily in relation to a pump system having at least two pumps which are capable of providing both a high volume, low pressure output, and also a low volume, high pressure output to meet the specific demands of the load device. One particular example of load device having this requirement is an hydraulically energised booster for a hydraulic braking system of a vehicle.

There are certain hydraulic systems which require high volume flow at low pressure as well as low volume flow at high pressure. Such a requirement occurs, for example, in a system in which a piston moves freely until it encounters a load reaction member which imposes a relatively high resistance to further motion of the piston. In such an arrangement, it is desired to have a pump system which delivers high volume flow at low pressure to provide for free travel of the piston over a relatively large range and then delivers low volume flow at high pressure for piston displacement over a small range of travel. This would allow high speed motion during the free travel and the exertion of a relatively large force over a small range of travel and at a standstill.

Hydraulic brakes on automotive vehicles are commonly provided with means to assist the driver in the application of the brakes. Such brake systems, known as "power brakes", conventionally include a servo motor called a "booster" for augmenting the force applied by the driver to the piston of the master cylinder. It has been a common practice to utilize a vacuum powered booster on vehicles having spark ignited engines because of the availability of intake manifold vacuum for energizing the booster. However, on many present day vehicles it is desired to use an hydraulic booster with an electrically energized hydraulic pump. Such is the case with diesel engine vehicles which have no convenient vacuum source. It is also desired to have an electrically powered booster for other reasons such as having booster operation with the engine off.

In an hydraulic brake system, the flow requirement during the initial brake pedal travel is different from that during the final pedal travel. The system requires a high volume, low pressure flow during the free travel of the movable brake members and then when the brake members, e.g. brake pad and disc are engaged, the system requires high pressure, low volume flow to exert the braking effort.

In the prior art, it is known to use a motor driven hydraulic booster pump with the motor being energized from the vehicle battery. In one such arrangement, hydraulic fluid under pressure from the pump is stored in an accumulator. The pump is turned on and off in response to accumulator pressure in order to meet the flow requirements of the brake system. This is disadvantageous in that it requires both the accumulator and switch which are expensive components. Also, a high power motor is required to provide sufficient fluid for the situation when the driver pumps the brake pedal. Also, accumulators are not always reliable and they gradually lose pressurization gas thus requiring replacement after a number of years. Also, the accumulator must be charged at all times when the vehicle is in operation with the consequence that the motor is turned on at times not necessarily coincident with the application of the brakes resulting in an on/off cycle which is distracting to the driver. It is also known in the prior art to maintain a continuous flow of fluid from the pump, which is energized from the vehicle engine or an electric motor, and to impose restriction on the flow to obtain the pressure required to actuate the booster.

It is also known from US 3,968,811 to provide a pump system for supplying pressurised fluid to a load device from a reservoir and comprising a motor, a first pump in the form of a low pressure pump and a second pump in the form of a high pressure pump which are adapted to be driven concurrently by the motor, in which the pumps have respective inlets coupled with the reservoir and respective outlets for delivering pressurised fluid supplies into the system for transmission to the load device. A common discharge passage is coupled with the outlet of the high pressure pump and is coupled through a one-way valve with the outlet of the low pressure pump, and serves to supply pressurised fluid to the load device. An unloading valve is coupled with the outlet of the low pressure pump and is operable to connect it to the reservoir in response to fluid pressure in the common discharge passage which exceeds a predetermined pressure. The unloading valve also includes a valve element movable between a closed position and an open position, means urging the valve element towards the open position in response to fluid pressure in the common discharge passage, and resilient means urging the valve element to the closed position.

The invention is concerned with improvements to a pump system of the type disclosed in US 3,968,811.

According to the invention there is provided a pump system for supplying pressurized fluid to a load device from a reservoir, said system comprising:

a motor;

a first pump and a second pump adapted to be driven concurrently by said motor, said pumps having respective inlets coupled with said reservoir and having respective outlets;

a common discharge passage coupled with the outlet of said second pump and coupled through a one-way valve with the outlet of said first pump and adapted to be coupled with said load device; and,

an unloading valve coupled with the outlet of the first pump and operable to connect it to the reservoir in response to a predetermined fluid pressure in the common discharge passage, the unloading valve comprising;

a valve element movable between a closed position and an open position;

means urging said valve element to move from said closed position toward said open position in response to fluid pressure in the common discharge passage; and

resilient means urging said valve element toward said closed position:

characterised in that said valve element is movable beyond said open position against the urging of said resilient means in response to pressure in the common discharge passage greater than said predetermined pressure; and,

in that said un-loading valve further includes valve element affected means responsive to movement of said valve element to positions beyond said open position for changing the pressure in said discharge passage.

A more complete understanding of this invention may be obtained from the detailed description that follows taken with the accompanying drawings.

Description of the Drawings

FIGURE 1 is a schematic diagram of a general type of pump system to which the invention may be applied;

FIGURE 2 is a pictorial view showing the pump system of this invention as it is embodied in an hydraulic brake system of a motor vehicle;

FIGURE 3 shows a hydraulic brake booster;

FIGURE 4 shows the construction of the pump system of this invention;

FIGURE 5 is a view taken of lines 5-5 of FIGURE 4;

FIGURE 6 is a view taken on lines 6-6 of FIGURE 4;

FIGURES 7, 8 and 9 are is a schematics of alternate motor control circuits.

Best Mode for Carrying out the Invention

Referring now to the drawings, there is shown an illustrative embodiment of the invention in a plural pump system with each pump having a different displacement capacity. A particular illustrative embodiment is shown in an hydraulic booster pump system for use in the brake system of a motor vehicle. It will be appreciated, as the description proceeds, that the invention is useful in other hydraulic systems which require both high volume at low pressure and low volume at high pressure.

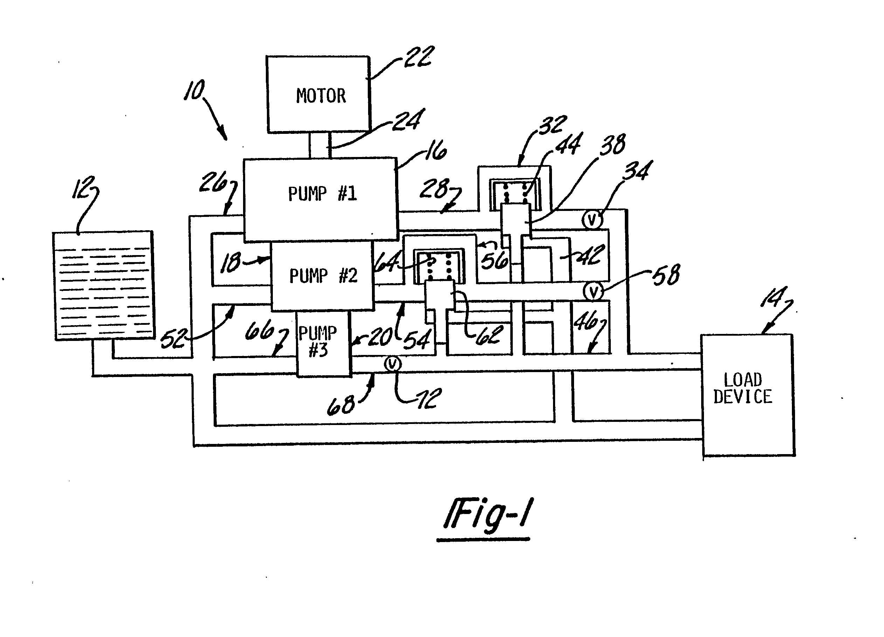

A general type of pump system to which the invention may be applied will be described first with reference to the schematic diagram of FIGURE 1. In the system of FIGURE 1, the pump system 10 is adapted to receive hydraulic fluid from a reservoir 12 and supply pressurized fluid to a hydraulic load device 14. The load device 14 may be any of the wide variety of hydraulic devices which is required to be energized with both high volume fluid flow at low pressure and with relatively low volume flow at high pressure.

The pump system 10 comprises a set of three pumps 16, 18 and 20. The pump 16 has a relatively high volume displacement, pump 18 has an intermediate volume displacement and the pump 20 has a relatively low volume displacement. Each of the pumps is a rotary, positive displacement pump. All of the pumps are driven from a single motor 22 by a drive shaft 24, which is preferably common to all of the pumps.

Pump 16 has an inlet 26 connected with the reservoir 12 and an outlet 28 which communicates with the load device 14 through a passage or conduit 32, a check valve 34 and a common discharge passage 46. An unloading valve 38 is disposed between the passage 32 and a return passage 42 which communicates with the reservoir 12. The unloading valve 38 obstructs flow from the outlet 28 to the return passage 42 when the valve is closed. The valve 38 is biased toward its closed position by a spring 44 and it is urged toward its open position by fluid pressure in the common discharge passage 46. When the pressure in the common discharge passage 46 reaches a predetermined value, the unloading valve 38 is opened and the outlet of the pump 16 is dumped through the passage 42 to the reservoir and the pump operates in an idle condition. In this condition, the check valve 34 prevents back flow from the common discharge passage 46 to the outlet 28 of pump 16.

Pump 18, which has a smaller displacement than pump 16, has an inlet 52 connected with the reservoir 12 and it has an outlet 54 which communicates through a passage or conduit 56 and a check valve 58 and the common discharge passage 46 with the load device 14. An unloading valve 62, in its closed position, obstructs fluid flow from the outlet 54 to the return passage 42 which communicates with the reservoir 12. The unloading valve 62 is biased toward its closed position by a spring 64. It is urged toward its open position by fluid pressure from the common discharge passage 46. When the pressure in the passage 46 reaches a predetermined value, which is higher than the pressure value at which valve 38 opens, the unloading valve 62 is opened and the outlet of the pump 18 is dumped through the return passage 42 to the reservoir and the pump operates in an idle condition.

The pump 20, which has a relatively low displacement, has an inlet 66 communicating with the reservoir 12 and an outlet 68 which communicates through the check valve 72 and the common discharge passage 46 with the load device 14. The check valve 72 is required only if the pump 20 is driven intermittently.

In operation of the pump system 10, as depicted in FIGURE 1, pumps 16, 18 and 20 are driven simultaneously by the motor 22. Further, the unloading valve 38 is adapted to open at a first predetermined pressure in the common discharge passage 46 and the unloading valve 62 is adapted to open at a second predetermined pressure, the second predetermined pressure being higher than the first. For explanatory purposes, it will be assumed that the load device 14 requires a high volume of fluid at low pressure when the motor is first turned on and that the flow requirement diminishes and the fluid pressure requirement increases over a period of time until the only flow is that needed to supply the loss due to leakage.

When the motor 22 is first started, the pressure in the common discharge passage 46 is zero which is lower than the first predetermined value and consequently the unloading valve 38 and the unloading valve 62 are both closed. Accordingly, all three pumps 16, 18 and 20 supply pressurized fluid through the common discharge passage 46 to the load device 14. When the pressure in the common discharge passage 46 increases to the first predetermined pressure, the unloading valve 38 is opened thereby against the resistance of spring 44 and the output of pump 16 is dumped to the reservoir so pump 16 imposes minimal load on motor 22. Check valve 34 prevents back flow to the outlet of pump 16. As the fluid pressure increases further in the common discharge passage 46 to the second predetermined pressure, the unloading valve 62 is opened and the outlet of pump 18 is dumped to the reservoir so pump 18 imposes minimal load on motor 22. The check valve 58 prevents back flow from the discharge passage 46 to the outlet of pump 18. Thus both pumps 16 and 18 are operated in an idle condition and the pump 20 continues to supply pressurized fluid through the common discharge passage 46 to the load device. This mode of operation continues so long as the pressure in the discharge passage 46 is greater than the second predetermined pressure. If the pressure decreases below this value, the unloading valve 62 will be closed and pump 18, in addition to pump 20, will supply pressurized fluid to the load device. If the pressure should decrease below the first predetermined pressure, the unloading valve 38 will be closed and all three pumps will again supply pressurized fluid to the load device.

A particular illustrative embodiment of the invention is a hydraulic booster pump system for use in a brake system of a motor vehicle. This illustrative embodiment will now be described with reference to FIGURES 2 through 8.

A vehicle hydraulic brake system which incorporates the subject invention is represented in the pictorial view of FIGURE 2. This system comprises a brake pedal 110 which is manually actuated to operate a hydraulic booster 212, which in turn energizes a master cylinder 114. A booster pump system 116, constructed in accordance with this invention, supplies pressurized hydraulic fluid to the booster 212.

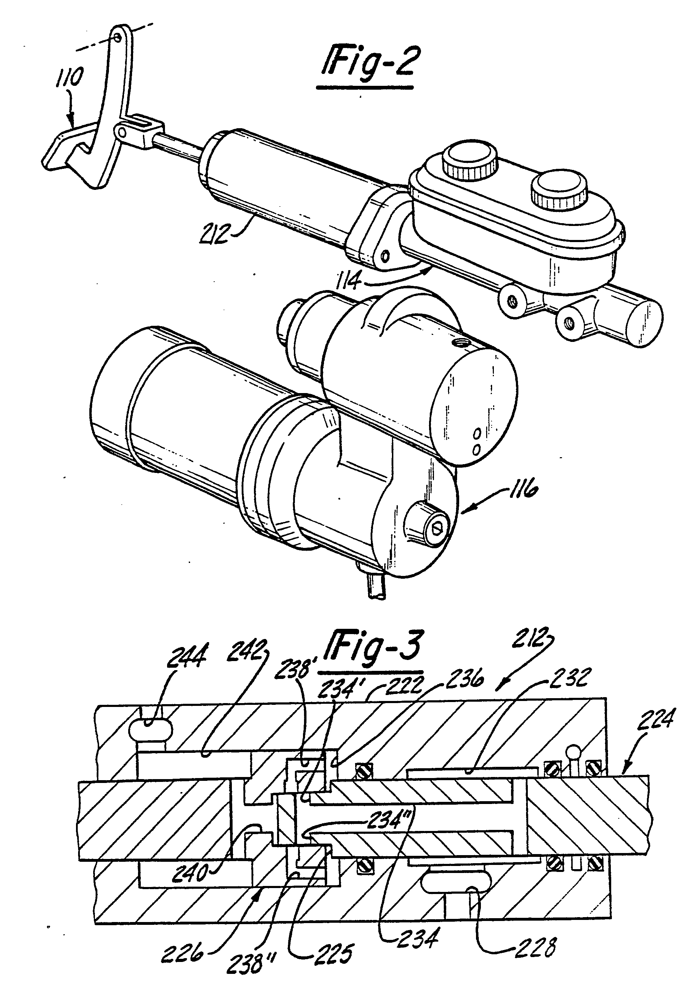

The hydraulic booster 212 is depicted further in FIGURE 3 and will be described briefly prior to the description of the booster pump system 116.

Hydraulic boosters are well known and a booster of conventional design may be used with this invention; however, the booster shown in FIGURE 3 is especially adapted for use with the invention. This booster, which is of simple economical and compact design, is advantageous in a system, as in this invention, which does not rely on an accumulator and the attendant requirement for minimum leakage.

In general the booster comprises a body or cylinder 222, a control element 224 and an output piston 226. The control element 224 is connected with the brake pedal 110 through suitable linkage and is actuated thereby. The output piston 226 is operatively connected with the master cylinder 114 which pressurizes the brake fluid in the brake lines to the wheel cylinders to exert braking effort in accordance with the manual effort applied to the brake pedal. Pressurized fluid from the pump system 116 is supplied to the booster through an inlet passage 228 which communicates with annular chamber 232. Fluid from the chamber 232 is supplied through a passage 234 in the control element 224 to a pressure chamber 236 in the manner to be described below. At times, the pressure chamber 236 may be connected through passages 238' and 238'' and through a passage 240 to a chamber 242 and then to a sump or low pressure reservoir through an outlet passage 244 whereby fluid is released from pressure chamber 236.

When the brake pedal 110 is in its free or retracted position, the control element 224 is retracted so that fluid is blocked from flowing through passages 234' and 234'' into passages 238' and 238''. When the brake pedal 110 is depressed, the control element 224 moves to the left relative to the output piston 226 causing passages 234' and 234'' to move toward alignment with passages 238' and 238''. Leftward movement of control element 224 relative to the output piston 226 tends to close the communication through passages 238' and 238'' of the pressure chamber 236 with the passage 240 and the reservoir and allows a build-up of pressure in chamber 236. Further travel of the control element 224 relative to the output piston 226 causes passages 234' and 234'' to communicate with passages 238' and 238'' and causes the pressure chamber 236 to be pressurized. The pressure in chamber 236 acts on the output piston 226 which exerts a force on the piston of the master cylinder to apply the brakes. The pressure in chamber 236 also acts on the face 225 of control element 224 with a force proportional to the pressure in chamber 236 which is imparted through the brake pedal 110 to give the driver an indication of the braking force. Increased force on the brake pedal causes further leftward movement of the control element 224 and additional pressurized fluid is admitted to the pressure chamber 236 causing further movement of the output piston 226 such that it tends to follow the movement of the control element 224. When the brake pedal is released, a spring (not shown) in combination with the pressure in the pressure chamber 236 acting on face 225 of the control element 224 urges it to the right so that the brake pedal assumes its free position. The pressure in chamber 236 is relieved through passages 238' and 238'' which communicates through passage 240 with the outlet chamber 242 and the outlet passage 244 to the reservoir. The output piston 226 is restored to its home position by the master cylinder. The booster is failsafe in that the control element 224 is adapted to mechanically engage the output piston 226 which is then actuated by motivating force from the brake pedal, in the event that fluid pressure fails to move the output piston 226.

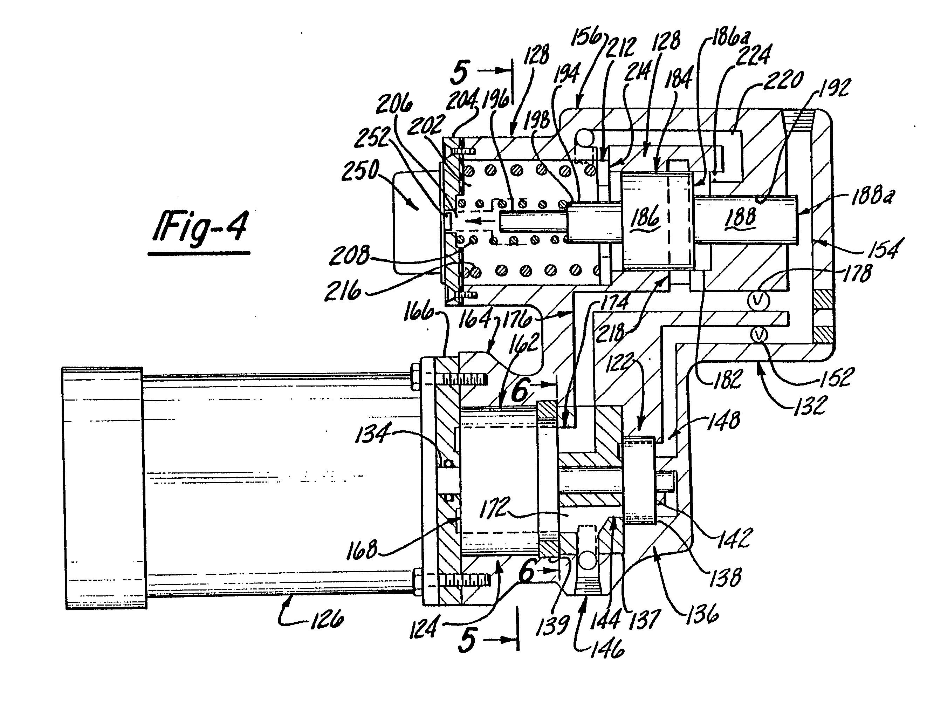

The booster pump system 116, as it is adapted for use in the hydraulic brake system of FIGURE 2, is depicted in detail in FIGURES 4, 5 and 6. In general, the booster pump system comprises a first pump 122 of relatively small displacement and a second or additional pump 124 of relatively large displacement, both of which are driven by an electric motor 126. Additionally, the pump system comprises an unloading valve 128.

The pumps 122 and 124 share a common housing 132 and are connected with the motor 126 by a common drive shaft 134. Both pumps 122 and 124 are internal gear pumps with one-tooth difference, known as a gerotor type pump.

The smaller displacement pump 122 comprises an internal gear 138 which is rotatably mounted in the pump body 136 which is preferably integral with the casing 132 and held by a pressure plate retainer 137. Pressure plate retainer 137 is held in place by ring 139. The pump includes an impeller 142 which is mounted for rotation on the drive shaft 134 eccentrically of the internal gear 138. The pump has an inlet 144 which communicates with the reservoir (not shown) through a suitable fitting 146 in the casing 132. The pump has an outlet 148 in the body 136 which is connected through a check valve 152 with a common discharge passage 154 in the body 156 of the unloading valve 128.

The larger displacement pump 124 comprises an internal gear 162 which is rotatably mounted in the pump body 164 which is preferably integral with the casing 132 and held by a pressure plate retainer 166. The pump includes an impeller 168 which is mounted for rotation on the drive shaft 134 eccentrically of the internal gear 162. The pump has an inlet 172 which is in fluid communication with the reservoir through the fitting 146 in the casing 132. The pump has an outlet 174 which communicates through an outlet passage 176 and a check valve 178 in the body 156 of the unloading valve 128.

The unloading valve 128 comprises a valve body 156 which defines a valve cylinder 182. A valve piston 184 has an enlarged head 186 slidably mounted in the cylinder 182 and a first stem 188 which extends from one end of the head 186 and is slidably mounted in a bore 192 in the body. The stem 188 terminates in a face 188a in fluid communication with the discharge passage 154. Additionally, the piston 184 includes a second stem 194 extending from the other end of the head 186. Stem 194 includes a stem part 196 of reduced diameter and an annular shoulder 198 at the base of stem part 196. The stem 194 and stem part 196 extend into a cavity 202 in the body 156. A cover plate 204 is secured to the body and closes the cavity 202. The stem part 196 is adapted to pass through an opening 206 in the cover plate 204.

The piston 184 is biased towards the closed position by a helical spring 208 which has one end seated upon the shoulder 198 and the other end in abutment with the cover plate 204. The cavity 202 also contains a spring retainer 212 which seats against a stop shoulder 214 at the end of the cavity 202. A helical spring 216, which is much stronger than spring 208, has one end seated on the spring retainer 212 and the other end in abutment with the cover plate 204.

The unloading valve 128 has an inlet 218 in communication with the outlet passage 176 from the larger displacement pump 124. The inlet 218 is of annular configuration and surrounds the piston head 186. The unloading valve 128 has an outlet 220 which communicates through a flow restrictor 224 with the cylinder 182. Flow restrictor 224 may be a simple orifice or may be any such conventional means to maintain an approximately constant pressure drop. The outlet 220 is in fluid communication with the reservoir through a passage (not shown). When the piston 184 is in its closed position, the piston head 186 obstructs fluid flow between the valve inlet 218 and the valve outlet 220. When it is in its open position, a flow path extends from the inlet 218 through the flow restrictor 224 to the outlet 220.

For the purpose of control of the motor 126, a control device 250 is adapted for operation by the stem part 196 on the piston 184. As shown in FIGURE 4, the device 250 is mounted on the cover plate 204 and has an actuator plunger 252 in alignment with the hole 206. A control circuit for the motor 126 is depicted in FIGURE 7. In this circuit, the control device 250 is a switch 250a. The circuit comprises, in general, a vehicle battery 256 for energizing the motor 126 through a brake switch 258, and the switch 250a. The battery 256 has its negative terminal connected to ground and its positive terminal connected to one terminal of the motor 126 through the series combination of switches 258 and 250a. The other terminal of the motor 126 is connected to ground. The brake switch 258 is a normally open single pole single throw switch which is closed by actuation of the brake pedal. The control switch 250a is a normally closed single pole single throw switch which has an actuating plunger 252a which opens the switch when engaged by the stem part 196. Thus, when the brake switch 258 is closed by actuation of the brake pedal and when the control switch 250a is closed, the motor 126 is energized and the pumps 124 and 122 are operated. When either switch 250a or switch 258 is opened the motor 126 is turned off and both pumps stop.

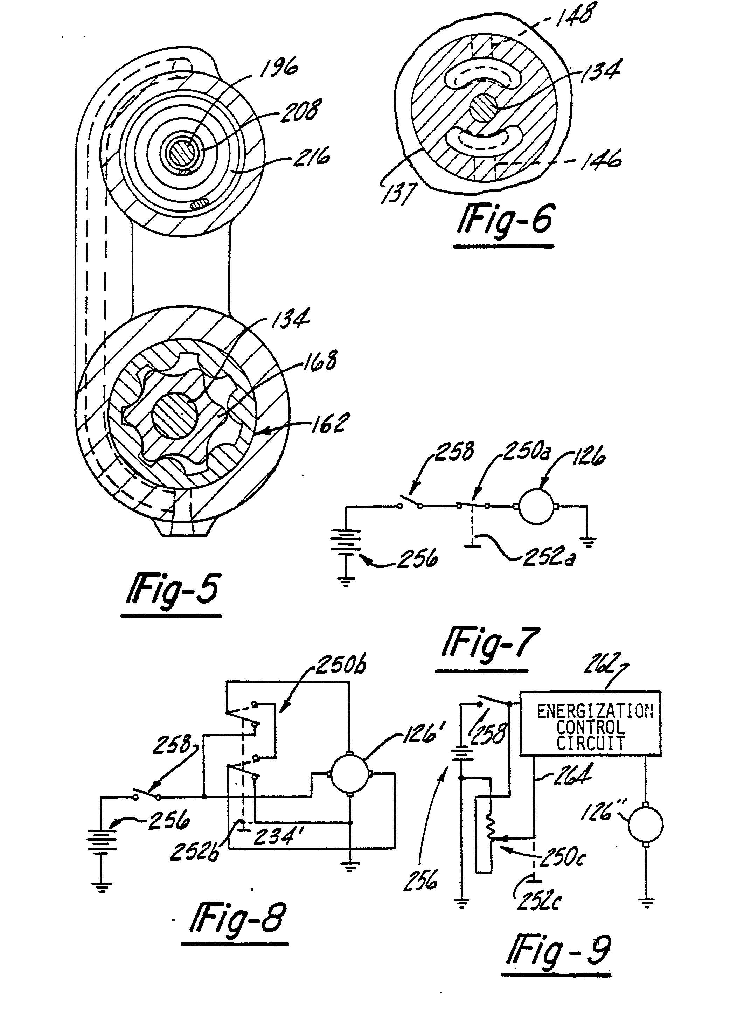

Another control circuit is shown in FIGURE 8 to provide for two-speed operation of the pumps. For this purpose, the motor 126' is a changeable speed motor. The motor 126' has two pairs of brushes which may be connected in parallel for high speed operation or in series for low speed operation. In this circuit, the control device 250 is a double pole double throw switch 250b. In general, the control circuit comprises the vehicle battery 256, the brake switch 258 and the control switch 250b. The control switch 250b has an actuating plunger 252b which is operated by the stem part 196. When the actuating plunger 252b is in its extended position, as shown in FIGURE 8, the switch 250b connects the motor 126' across the battery with the two pairs of brushes in parallel for high speed operation of the motor. When the actuating plunger 252b of the switch is depressed, (phantom lines) the motor 126' is connected across the battery with the two pairs of brushes connected in series for slow speed motor operation.

Another control circuit is shown in FIGURE 9 to provide for variable energization of the motor 126''. The motor is connected across the battery 256 through the brake switch 258 and through an energization control circuit 262. The energization control circuit 262 may be a conventional transistor circuit for varying the effective voltage applied to the motor. The energization control circuit 262 has a signal voltage input 264 and is adapted to provide an increasing voltage to the motor in response to an increasing signal voltage. The control device 250 is a potentiometer 250c connected across the battery 256. The movable contact of the potentiometer is displaceable by the actuator 252c. When the brake switch 258 is closed by actuation of the brake pedal and when the actuating plunger 252c is in its extended position, as shown in FIGURE 9, the potentiometer applies a relatively high voltage signal to the input 264 and the energization control circuit 262 applies a relatively high voltage across the motor. When the actuating plunger 252c is depressed, the potentiometer 250c applies a relatively low signal voltage to the input 264 and the energization control circuit 262 applies a relatively low energizing voltage to the motor. It will be apparent that the energization control circuit 262 may be of any known type for varying the voltage, current or power to the motor.

The operation of the booster pump system in the hydraulic brake system will now be described with reference to FIGURES 3 through 8. As previously noted, the motor circuit is energized through the brake switch 258 from the battery 256. The brake switch is actuated by the brake pedal and may be the same switch that energizes the vehicle brake lights. With the brake pedal 110 in its free position, the brake switch 258 is open and no power is applied to the motor 126. When the driver depresses the brake pedal, the initial movement thereof causes the brake switch to close and the motor is energized. The mode of operation of the system will depend upon the rate of displacement of the brake pedal by the driver. Two modes of operation will be described; first, a panic stop produced by rapid depression of the brake pedal and second, a gradual stop produced by slow depression of the brake pedal.

In the case of a panic stop, the driver forcefully depresses the brake pedal causing it to be moving fast at the time the brake switch 258 is closed. This will create an immediate demand for a large volume of low pressure fluid and as soon as the switch closes, the motor will quickly approach maximum speed and drive the pumps at near maximum speed. At pump start-up, the pressure in the discharge passage 154 is low and the unloading valve 128 is closed. While the unloading valve remains closed, both the small displacement pump 122 and the large displacement pump 124 deliver fluid to the discharge passage 154. Most or all of the output from the discharge passage enters the inlet passage 228 of the booster 212 and flows through the annular chamber 232 to passage 234 and thence through passages 234' and 234'' to passages 238' and 238'' to the pressure chamber 236. This causes a pressure build-up in the chamber 236 which applies pressure to the piston 226 to assist the driver in applying the brakes. It is possible in this mode of operation, that the failsafe character of the booster 212 will come into effect and the driver will force the output piston to move ahead of the fluid supply to the pressure chamber 236 thus tending to draw fluid into the chamber.

When the vehicle braking system becomes pressurized, the demand for pressurized fluid will decrease, the motor speed will decrease due to the increased load and the flow rate of the pressurized fluid will drop. The pressure at the discharge passage 154 of the pumps will increase, thus increasing the force acting on the face 188a of the stem 188. When the pressure increases to a first predetermined value, this force will exceed the bias force exerted by the spring 208, the piston 184 will move toward the open position. When the displacement of the piston is great enough so that fluid is admitted to the cylinder 182, the flow restrictor 224 will cause a back pressure to develop in the cylinder 182. The pressurized fluid in cylinder 182 acts on the face 186a of the piston head 186 and increases the opening force, causing the unloading valve to move abruptly to its open position. The valve is in the open position when the bias spring 208 is compressed sufficiently that the piston head 186 is in engagement with the spring retainer 212 and unobstructed fluid flow is permitted from the inlet 218 to the cylinder 182.

With the unloading valve 128 open, i.e. dumping, the larger displacement pump 124 will idle, i.e. the outlet passage 176 will be connected through the cylinder 182, the flow restrictor 224 and the outlet passage 220 with the reservoir. In this condition, the smaller displacement pump 122 will continue to deliver pressurized fluid to the common discharge passage 154 and the output thereof will be diminished to a fraction of the previous flow, although the diminished load on the motor will enable it to run faster. The diminished flow may be inadequate to meet the demand and the pressure in the discharge passage 154 may fall off and the unloading valve may reclose. Several cycles of the opening and closing of the unloading valve may occur before the demand for fluid drops to a point that can be met by the smaller displacement pump. This effect can be minimized, if desired, by inclusion of a third intermediate displacement pump and a second unloading valve, as described with reference to FIGURE 1. Finally, the demand for fluid will drop to a minimal value because the driver is satisfied with the braking force and does not increase the force applied to the pedal or because he is demanding and obtaining the maximum boost from the system. As the demand for fluid diminishes, the pressure in the common discharge passage 154 increases and thus the force on the face 188a of the stem 188 increases. When the pressure increases to a predetermined value, this force on the stem 188 will exceed the force exerted on the spring retainer 212 by the spring 216, plus the force exerted by the spring 208, and the piston 184 will move and further compress the springs 208 and 216 and store energy therein. As the pressure further increases in the discharge passage 154, the springs 208 and 216 are further compressed and the unloading valve functions as a pressure accumulator, i.e. the face 188a on the stem 188 under the influence of the compressed springs 208 and 216, exerts force on the fluid in the passage 154 and maintains it in a pressurized condition. When the pressure in discharge passage 154 reaches a predetermined pressure, under the influence of the smaller displacement pump 122, the piston 184 will be displaced sufficiently against the springs 208 and 216 that the stem part 196 will actuate the actuating plunger 252a of the switch 250a. As described with reference to FIGURE 7, this will open the switch 250a and the motor 126 will be deenergized. Accordingly, pumping action by the smaller displacement pump 122 will cease but pressure will be maintained in the discharge passage 154 by the force of springs 208 and 216 on the piston 184 causing it to function as a pressure accumulator. Assuming that the brake pedal position remains constant, either requiring maximum boost or some value less than maximum, the braking force will remain at a steady value and the only flow required will be that needed to replenish leakage. In this condition, the piston 184 will move under the influence of the springs 208 and 216 to supply the fluid to replenish leakage. When the stem part 196 moves sufficiently, the switch 250a will be closed and the motor 126 will be turned on to drive the pumps 124 and 122. Since the unloading valve 128 is open, only the smaller displacement pump 122 will supply pressurized fluid to the discharge passage 154. This will increase the fluid pressure in the passage 154 in the manner described above.

In case of gradual brake application by the driver, the brake switch 258 is closed during the initial movement of the brake pedal and the motor 126 is turned on. Except for fluid leakage, there is no immediate demand for fluid flow because the passages 234' and 234'' in the booster are obstructed. Thus, the pressure in the discharge passage 154 increases and the unloading valve 128 is opened. With the unloading valve opened, the larger displacement pump 124 idles and the smaller displacement pump pressurizes the output passage 154. The increasing pressure in the discharge passage 154 will increase the compression of the springs 208 and 216 until the pressure reaches a predetermined value. At this point, the plunger 252a of the switch 250a will be depressed sufficiently that the switch 250a will be opened turning off the motor 126. As described above, the force of the springs 208 and 216 maintains the pressurization of the fluid in discharge passage 154. As the driver further depresses the brake pedal, the passages 234' and 234'' move into alignment with passages 238' and 238'' and fluid flows into the pressure chamber 236 causing piston 184 to move toward the passage 154 in its capacity as accumulator. When the stem part 196 moves sufficiently, the switch 250a will be reclosed to start the motor. With fluid flow into the pressure chamber 236, there will be a pressure drop between the passages 234' and 234'' and the passages 238' and 238'', respectively, to control the pressure in chamber 236 and cause the output piston 226 to move in synchronism with the control element 224. As the pedal is further depressed and the flow increases up to a certain point, the unloading valve 128 will remain open and the smaller displacement pump 122 will deliver the required flow. However, if the flow rate exceeds the capacity of the smaller displacement pump 122, the pressure in the discharge passage 154 will decrease and the unloading valve 128 will close causing the larger displacement pump 124 to become operative and both pumps will deliver fluid to the discharge passage 154. When the vehicle braking system becomes pressurized, the demand for fluid will diminish and the unloading valve 128 will open and the pressure at the discharge passage 154 will increase. The increasing pressure will compress the springs 208 and 216 and when the stem part 196 moves sufficiently, the motor will be turned off. The pressure in the discharge passage 154 will vary as a result of leakage and with the variations of brake application by the driver. Small amounts of fluid will be supplied by piston 184 functioning in its capacity as accumulator. When the stem part 196 moves sufficiently as a consequence of supplying pressurized fluid in the capacity of accumulator motor 126 will be turned on.

The operation of the booster pump system was described above with reference to a motor control circuit as depicted in FIGURE 7. In that system, the unloading valve 128 performs the additional function of a pressure accumulator and when the position of stem part 196 moves actuator 252a sufficiently upwards as shown schematically in FIGURE 7, the motor is turned off. It will now be understood that when the booster pump system utilizes the motor control circuit of FIGURE 8, the operation is similar in that the unloading valve 128 additionally functions as a pressure accumulator. The operation differs in that the changeable speed motor 126′ is controlled by the switch 250b to operate at high speed or low speed. When the switch 250b is actuated by stem part 196 of the piston 184, the switch 250b reconnects the motor for low speed operation. The motor continues to operate in low speed and may draw on the fluid accumulated as springs 108 and 116 were compressed until the actuating stem moves sufficiently to cause the switch 250b to switch the motor back to high speed operation. The operation of the system using the motor control circuit of FIGURE 9 is similar to that just described with reference to the circuit of FIGURE 8. The difference is that the circuit of FIGURE 9 provides continuously variable motor speed as the stem part 196 causes movement of the actuator 252c under the influence of pressure variations in the discharge passage 154.

A divisional application with the publication number EP—A—0,291,625 has been filed for the unloading valve as disclosed in FIGURE 4.

## Claims

1. A pump system for supplying pressurized fluid to a load device (14) from a reservoir, said system comprising:
   a motor (126);
   a first pump (124) and a second pump (122) adapted to be driven concurrently by said motor, said pumps having respective inlets (172, 144) coupled with said reservoir and having respective outlets (174, 148);
   a common discharge passage (154) coupled with the outlet (148) of said second pump (122) and coupled through a one-way valve (178) with the outlet (174) of said first pump (124) and adapted to be coupled with said load device (14); and,
   an unloading valve (128) coupled with the outlet (174) of the first pump (124) and operable to connect it to the reservoir (12) in response to a predetermined fluid pressure in the common discharge passage (154), the unloading valve comprising:
   a valve element (186) movable between a closed position and an open position;
   means (188a) urging said valve element (186) to move from said closed position toward said open position in response to fluid pressure in the common discharge passage (154); and
   resilient means (208) urging said valve element (186) toward said closed position:
   characterised in that said valve element (186) is movable beyond said open position against the urging of said resilient means (208) in response to pressure in the common discharge passage (154) greater than said predetermined pressure; and,
   in that said un-loading valve (128) further includes valve element affected means (250 or 188) responsive to movement of said valve element (186) to positions beyond said open position for changing the pressure in said discharge passage (154).

2. A pump system according to Claim 1, characterised in that said unloading valve (128) includes a stem (188) and an enlarged head (186), and said fluid pressure in the common discharge passage (154) acts on said stem for urging said valve element (186) away from the closed position.

3. A pump system according to Claim 2, characterised by a flow restrictor (224) arranged in the flow path from the unloading valve (128) to the reservoir (12) so that opening of the valve element (186) is assisted by the pressure drop at the restrictor (224).

4. A pump system according to Claim 1, 2 or 3 characterised by a further resilient means (216) adapted to become operative when said valve element (186) is in its open position for yielding by resisting further opening movement of the valve element.

5. A pump system according to any one of Claims 1 to 4, characterised in that said valve element affected means (250 or 188) comprises a motor control means (250) adapted to be actuated by said unloading valve (128) for controlling the energisation of the motor (126).

6. A pump system according to any one of Claims 1 to 4, characterised in that said valve element affected means (250 or 188) comprises switch means (250b) adapted to be actuated by said unloading valve (128) for reconnecting said motor for low speed operation.

7. A pump system according to Claim 1, characterised in that said valve element affected means (250 or 188) comprises a switch means (250b) adapted to be actuated by said unloading valve (128) for de-energising the motor (126).

8. A pump system according to Claim 1 characterised in that said valve element affected means (250 or 188) comprises means (250c) operatively coupled with said unloading valve (128) for varying the energisation of the motor (126).

9. A pump system according to any one of the preceding claims, characterised in that said pump system is adapted to deliver pressurised fluid to the brakes of a vehicle, in combination with:
   a vehicle brake system (110, 212, 114) including a brake;
   means (212, 114) responsive to said pressurised fluid for applying said brake; and,
   switching means (258) responsive to application of said brake for energising said pump system.

10. A pump system according to Claim 1, characterised in that said first pump is a low pressure pump (124) and said second pump is a high pressure pump (122).

11. A pump system according to Claim 10, characterised in that said unloading valve (128) includes a head (186) and a stem (188), said head being operable to dump the output of the unloading valve in response to said predetermined fluid pressure in the common discharge passage (154), and said stem (188) being operative to function as a pressure relief valve to release high pressure fluid in response to a further and higher predetermined fluid pressure in the common discharge passage (154).

12. A pump system according to Claim 11 characterised by a second biasing means (216) for yieldingly resisting opening movement of said head (186) beyond said open position.

**Patentansprüche**

1. Pumpengruppe zum Liefern einer unter Druck stehenden Flüssigkeit an eine als Last wirkende Vorrichtung (14) aus einem Behälter, welche Pumpengruppe umfaßt:

einen Motor (126),

eine erste Pumpe (124) und eine zweite Pumpe (122), die dazu bestimmt sind, gleichzeitig durch den Motor getrieben zu werden, welche Pumpen jeweilige Eingänge (172, 144), die mit dem Behälter verbunden sind, und jeweilige Ausgänge (174, 148) haben,

einen gemeinsamen Entladungskanal (154), der mit dem Ausgang (148) der zweiten Pumpe (122) und durch ein Einwegventil (178) mit dem Ausgang (174) der ersten Pumpe (124) verbunden ist und dazu bestimmt ist, mit der als Last wirkenden Vorrichtung (14) verbunden zu werden, und

ein Entladungsventil (128), das mit dem Ausgang (174) der ersten Pumpe (124) verbunden ist und betreibbar ist, um diesen mit dem Behälter (12) in Reaktion auf einen vorbestimmten Flüssigkeitsdruck in dem gemeinsamen Entladungskanal (154) zu verbinden, wobei das Entladungsventil enthält:

ein Ventilelement (186), das zwischen einer geschlossenen und einer geöffneten Stellung bewegbar ist,

ein Mittel (188a), welches auf das Ventilelement (186) einwirkt, sich aus der geschlossenen Stellung in Richtung auf die geöffnete Stellung in Reaktion auf den Flüssigkeitsdruck in dem gemeinsamen Entladungskanal (154) zu bewegen, und

ein federndes Element (208), welches das Ventilelement (186) in Richtung auf die geschlossene Stellung treibt,

dadurch gekennzeichnet, daß das Ventilelement (186) über die geöffnete Stellung hinaus gegen die treibende Kraft des federnden Elements (208) in Reaktion auf einen Druck in dem gemeinsamen Entladungskanal (154), der größer als der vorbestimmte Druck ist, bewegbar ist, und

daß das Entladungsventil (128) ferner ein durch das Ventilelement beeinflußtes Mittel (250 oder 188) enthält, das auf die Bewegung des Ventilelements (186) zu Stellungen über die geöffnete Stellung hinaus zum Verändern des Drucks in dem Entladungskanal (154) anspricht.

2. Pumpengruppe nach Anspruch 1, dadurch gekennzeichnet, daß das Entladungsventil (128) einen Stößel (188) und einen vergrößerten Kopf (186) enthält und daß der Flüssigkeitsdruck in dem gemeinsamen Entladungskanal (154) auf den Stößel zum Treiben des Ventilelements (186) fort von der geschlossenen Stellung wirkt.

3. Pumpengruppe nach Anspruch 2, gekennzeichnet durch einen Strömungs-Begrenzer (224), der in dem Strömungspfad von dem Entladungsventil (128) zu dem Behälter (12) angeordnet ist, so daß das Öffnen des Ventilelements (186) durch den Druckabfall über dem Begrenzer (224) unterstützt wird.

4. Pumpengruppe nach Anspruch 1, 2 oder 3, gekennzeichnet durch ein weiteres federndes Mittel (216), das dazu bestimmt ist, wenn sich das Ventilelement (186) in seiner geöffneten Stellung befindet, zum widerstehenden Nachgeben einer weiteren Öffnungsbewegung des Ventilelements wirksam zu werden.

5. Pumpengruppe nach einem der Ansprüche 1 bis 4, dadurch gekennzeichnet, daß das durch das Ventilelement beeinflußte Mittel (250 oder 288) aus einem Motorsteuermittel (250) besteht, das dazu bestimmt ist, durch das Entladungsventil (128) zum Steuern der Erregung des Motors (126) betätigt zu werden.

6. Pumpengruppe nach einem der Ansprüche 1 bis 4, dadurch gekennzeichnet, daß das durch das Ventilelement beeinflußte Mittel (250 oder 188) ein Schaltmittel (250b) umfaßt, das dazu bestimmt ist, durch das Entladungsventil (128) zum Wiedereinschalten des Motors für einen Niedrigdrehzahlbetrieb betätigt zu werden.

7. Pumpengruppe nach Anspruch 1, dadurch gekennzeichnet, daß das durch das Ventilelement beeinflußte Mittel (250 oder 288) ein Schaltmittel (250b) umfaßt, das dazu bestimmt ist, durch das Entladungsventil (128) zum Abschalten des Motors (126) betätigt zu werden.

8. Pumpengruppe nach Anspruch 1, dadurch gekennzeichnet, daß das durch das Ventilelement beeinflußte Mittel (250 oder 288) ein Mittel (250c) umfaßt, das wirksam mit dem Entladungsventil (128) zum Variieren der Erregung des Motors (126) verbunden ist.

9. Pumpengruppe nach einem der vorhergehenden Ansprüche, dadurch gekennzeichnet, daß die Pumpengruppe dazu bestimmt ist, unter Druck stehende Flüssigkeit an die Bremsen eines Fahrzeugs zu liefern, und zwar in Kombination mit:

einem Fahrzeugbremssystem (110, 212, 114), das eine Bremse enthält,

Mitteln (212, 114), die auf die unter Druck stehende Flüssigkeit zum Betätigen der Bremse reagieren, und ein Schaltmittel (258), das auf das Betätigen der Bremse zum Treiben der Pumpengruppe reagiert.

10. Pumpengruppe nach Anspruch 1, dadurch gekennzeichnet, daß die erste Pumpe eine Niederdruckpumpe (12) und die zweite Pumpe eine Hochdruckpumpe (122) ist.

11. Pumpengruppe nach Anspruch 10, dadurch gekennzeichnet, daß das Entladungsventil (128) einen Kopf (186) und einen Stößel (188) enthält, wobei der Kopf betreibbar ist, um den Ausgang des Entladungsventils in Reaktion auf den vorbestimmten Flüssigkeitsdruck in dem gemeinsamen Entladungskanal (154) zu entladen, und der Stößel (188) betreibbar ist, um als ein Druckabspannungsventil zu fungieren, um die unter hohem Druck stehende Flüssigkeit in Reaktion auf einen weiteren höheren Flüssigkeitsdruck in dem gemeinsamen Entladungskanal (154) abzuspannen.

12. Pumpengruppe nach Anspruch 11, gekennzeichnet durch ein zweites vorspannendes Mittel (216) zum widerstehenden Nachgeben der Öffnungsbewegung des Kopfes (186) über die geöffneten Stellung hinaus.

## Revendications

1. Dispositif de pompage destiné à fournir un fluide sous pression à une charge (14) à partir d'un réservoir, ce dispositif comprenant:

un moteur (126);

une première pompe (124) et une seconde pompe (122) adaptées pour être entraînées simultanément par ce moteur, ces pompes comportant des entrées respectives (172, 144) reliées au réservoir et comportant des sorties respectives (174, 148);

un passage commun de refoulement (154) relié à la sortie (148) de la seconde pompe (122) et relié, par l'intermédiaire d'une soupape unidirectionnelle (178), à la sortie (174) de la première pompe (124), ce passage étant destiné à être relié à la charge (14); et

une soupape de sûreté (128) reliée à la sortie (174) de la première pompe (124) et pouvant fonctionner de façon à relier cette sortie au réservoir (12) sous l'influence d'une pression de fluide fixée à l'avance régnant dans le passage commun de refoulement (154), cette soupape de sûreté comprenant un élément obturateur (186) mobile entre une position fermée et une position ouverte, des moyens (188a) repoussant cet élément obturateur (186) de façon à le faire se déplacer de la position fermée vers la position ouverte sous l'influence de la pression de fluide régnant dans le passage commun de refoulement (154), et des moyens élastiques (208) repoussant l'élément obturateur (186) vers la position fermée, caractérisé en ce que l'élément obturateur (186) peut se déplacer au-delà de la position ouverte, à l'encontre de la sollicitation des moyens élastiques (208), sous l'influence d'une pression, régnant dans le passage commun de refoulement (154), qui est supérieure à ladite pression fixée à l'avance, et en ce que la soupape de sûreté (128) comprend en outre des moyens (250 ou 188) soumis à l'influence de l'élément obturateur, qui réagissent à un déplacement de l'élément obturateur (186) jusqu'à des positions situées au-delà de la position ouverte en modifiant la pression dans le passage de refoulement (154).

2. Dispositif de pompage suivant la revendication 1, caractérisé en ce que la soupape de sûreté (128) comprend une tige (188) et une tête plus large (186), et en ce que la pression de fluide régnant dans le passage commun de refoulement (154) agit sur la tige pour repousser l'élément obturateur (186) dans le sens l'éloignant de sa position fermée.

3. Dispositif de pompage suivant la revendication 2, caractérisé par un étranglement de débit (224) disposé dans le trajet d'écoulement allant de la soupape de sûreté (128) au réservoir (12), de façon que l'ouverture de l'élément obturateur (186) soit assistée par la chute de pression se présentant à l'endroit de cet étranglement (224).

4. Dispositif de pompage suivant la revendication 1, 2 ou 3, caractérisé par d'autres moyens élastiques (216) adaptés pour devenir opérationnels lorsque l'élément obturateur (186) est dans sa position ouverte, de façon à résister élastiquement à un déplacement supplémentaire d'ouverture de cet élément obturateur.

5. Dispositif de pompage suivant l'une quelconque des revendications 1 à 4, caractérisé en ce que les moyens (250 ou 188) se trouvant sous l'influence de l'élément obturateur comprennent des moyens de commande de moteur (250) adaptés pour être actionnés par la soupape de sûreté (128) de façon à commander la mise sous tension du moteur (126).

6. Dispositif de pompage suivant l'une quelconque des revendications 1 à 4, caractérisé en ce que les moyens (250 ou 188) soumis à l'influence de l'élément obturateur comprennent un interrupteur (250b) adapté pour être actionné par la soupape de sûreté (128) de façon à reconnecter le moteur en fonctionnement à faible vitesse.

7. Dispositif de pompage suivant la revendication 1, caractérisé en ce que les moyens (250 ou 188) soumis à l'influence de l'élément obturateur comprennent un interrupteur (250b) adapté pour être actionné par la soupape de sûreté (128) de façon à mettre le moteur (126) hors tension.

8. Dispositif de pompage suivant la revendication 1, caractérisé en ce que les moyens (250 ou 188) soumis à l'influence de l'élément obturateur comprennent des moyens (250c) couplés fonctionnellement à la soupape de sûreté (128) de façon à faire varier l'alimentation du moteur (126).

9. Dispositif de pompage suivant l'une quelconque des revendications précédentes, caractérisé en ce qu'il est destiné à fournir du fluide sous pression aux freins d'un véhicule, en combinaison avec un système de freinage de véhicule (110, 212, 214) comportant un frein, avec des moyens (212, 114) qui réagissent au fluide sous pression en appliquant le frein, et avec des moyens de commutation (258) qui réagissent à l'application du frein en mettant le dispositif de pompage sous tension.

10. Dispositif de pompage suivant la revendication 1, caractérisé en ce que la première pompe est une pompe basse pression (124) et la seconde pompe est une pompe haute pression (122).

11. Dispositif de pompage suivant la revendication 10, caractérisé en ce que la soupape de sûreté (128) comprend une tête (186) et une tige (188), la tête servant à faire se vider la sortie de cette soupape de sûreté lorsque ladite pression de fluide fixée à l'avance se présente dans le passage commun de refoulement (154), et la tige (188) servant à remplir la fonction de soupape de surpression afin d'évacuer du fluide sous pression élevée lorsqu'une autre pression de fluide fixée à l'avance, plus élevée, se présente dans le passage commun de refoulement (154).

12. Dispositif de pompage suivant la revendication 11, caractérisé par des seconds moyens de sollicitation élastique (216) servant à résister élastiquement à un déplacement d'ouverture de la tête (186) audelà de ladite position ouverte.

Fig-1

## Fig-2

## Fig-3

Fig-4

Fig-5

Fig-6

Fig-7

Fig-8

ENERGIZATION
CONTROL
CIRCUIT

Fig-9

4